# FASCICULE DE BREVET EUROPEEN

(11) **EP 1 794 933 B1**
(45) Date de publication et mention de la délivrance du brevet: **03.07.2019**
(21) Numéro de dépôt: 05805572.4
(22) Date de dépôt: 08.09.2005
(51) Int. Cl.: H04W 48/18, H04W 72/00, H04L 29/06

(54) **ATTACHEMENT D'UN TERMINAL MULTI ACCES A UN RESEAU DE COMMUNICATION**
VERBINDUNG EINES ENDGERÄTES MIT MEHRFACHZUGANG MIT EINEM KOMMUNIKATIONSNETZWERK
ASSOCIATION OF A MULTI-ACCESS TERMINAL TO A COMMUNICATION NETWORK

(30) Priorité: 13.09.2004 FR 0452027
(43) Date de publication de la demande: 13.06.2007
(73) Titulaire: Microsoft Technology Licensing, LLC, Redmond, WA 98052 (US)
(72) Inventeur: NJEDJOU, Eric, F-35000 Rennes (FR); BERTIN, Philippe, F-35690 Acigne (FR)
(74) Mandataire: Grünecker Patent- und Rechtsanwälte PartG mbB
(86) Numéro de dépôt international: PCT/FR2005/002245
(87) Numéro de publication internationale: WO 2006/030116

(56) Documents cités:
- WO-A-03/091900
- US-A1- 2002 066 011
- US-A1- 2003 134 642
- GOPAL R ET AL: "Policy based access router selections and context transfers in mobile IP network" 23 octobre 2002 (2002-10-23), CONFERENCE ON NETWORK CONTROL AND ENGINEERING FOR QUALITY OF SERVICE, SECURITY AND MOBILITY, PAGE(S) 3-14 , XP002966424 le document en entier
- MAHONEN P ET AL: "PLATFORM-INDEPENDENT IP TRANSMISSION OVER WIRELESS NETWORKS: THE WINE APPROACH" IEEE PERSONAL COMMUNICATIONS, IEEE COMMUNICATIONS SOCIETY, US, vol. 8, no. 6, décembre 2001 (2001-12), pages 32-40, XP001076793 ISSN: 1070-9916
- SHANKAR S ET AL: "QOS SIGNALING FOR PARAMETERIZED TRAFFIC IN IEEE 802.11E WIRELESS LANS" LECTURE NOTES IN COMPUTER SCIENCE, SPRINGER VERLAG, NEW YORK, NY, US, vol. 2402, 1 août 2002 (2002-08-01), pages 67-83, XP001188291 ISSN: 0302-9743

## Description

La présente invention concerne de manière générale les réseaux d'accès dans le domaine des télécommunications, et en particulier les procédures d'attachement à ces réseaux d'accès, utilisées par des terminaux qui peuvent être multi accès.

La coexistence de réseaux d'accès divers (cellulaire, réseaux locaux sans fil) amène les terminaux mobiles à être également de plus en plus aptes à s'attacher à plusieurs réseaux d'accès. Il se pose rapidement la question de savoir quelle est la meilleure technologie d'accès à utiliser, en fonction des besoins des utilisateurs mais aussi des caractéristiques intrinsèques des technologies considérées et d'informations dynamiques comme la charge de ces réseaux d'accès.

Les demandes de brevet US2003/0134642 et US2002/0066011 divulguent des terminaux mobiles aptes à s'attacher à plusieurs réseaux d'accès.

Actuellement, lorsqu'un terminal multi accès veut se connecter à un nouveau réseau d'accès, par exemple un réseau d'accès de type IEEE 802.11, l'information selon laquelle le terminal est déjà connecté à un premier réseau d'accès (par exemple un réseau d'accès UMTS) pourrait être enregistrée dans un gestionnaire de mobilité, en général situé dans le réseau coeur de l'un de ces réseau d'accès, ou situé à l'extérieur de ces réseaux d'accès. Pour cela, ce gestionnaire de mobilité devrait tenir des bases de tous les terminaux avec leurs états d'attachement sur différents réseaux.

Cependant un point d'accès peut nécessiter une telle information pour un terminal spécifique lui demandant l'attachement, par exemple dans le cas où un opérateur dispose de plusieurs réseaux d'accès et veut contrôler les ressources utilisées dans chacun de ces réseaux d'accès. Le point d'accès n'a pas directement cette information lors de la demande d'attachement.

En conséquence, l'information d'attachement d'un terminal à d'autres réseaux d'accès ne peut pas être prise en compte par un point d'accès pour accepter ou refuser la demande d'attachement du terminal. Or l'admission d'un terminal sur un point d'accès nécessite d'allouer ou de prévoir des ressources pour servir le terminal. L'information d'attachement d'un terminal à d'autres réseaux d'accès permet au point d'accès de mieux gérer ses ressources, en évitant d'admettre des terminaux qui peuvent utiliser d'autres ressources que celles de ce point d'accès, afin de pouvoir servir d'autres terminaux qui ont des besoins que seul ce point d'accès est apte à servir.

La présente invention a pour but de résoudre les inconvénients de la technique antérieure en fournissant un procédé permettant de porter à la connaissance d'un point d'accès découvert par le terminal, les attachements préalables éventuels de ce terminal à un ou plusieurs autres réseaux.

A cette fin, l'invention propose un procédé d'attachement d'un terminal multi accès à un réseau de communication tel que défini par la revendicatior indépendante 1.

Ceci permet au point d'accès auquel la demande d'attachement est faite, d'effectuer une sélection d'admission renseignée de ces informations sur les connexions du terminal à d'autres réseaux. Par exemple, le point d'accès peut ne pas admettre le terminal si les informations de qualité de service concernant une connexion sur l'accès courant du terminal ne justifient pas que le terminal ait besoin de s'attacher au nouveau point d'accès. La sélection d'admission est effectuée préalablement ou pendant la procédure d'attachement. Ceci permet au point d'accès de faire un contrôle d'admission avant d'engager toute autre procédure.

L'invention permet une meilleure gestion de la sélection du réseau d'accès pour un terminal multi accès. Elle s'applique en particulier pour des terminaux en phase de demande d'attachement à des réseaux locaux sans fils obéissant à la norme IEEE 802.11.

Selon une caractéristique préférée, l'envoi de données concernant les connexions du terminal à d'autres réseaux est effectué au niveau de la couche MAC. Ainsi l'admission renseignée peut être effectué par le point d'accès sans qu'il ait besoin d'accéder à un gestionnaire de mobilité dans le réseau coeur.

Selon une caractéristique préférée, l'envoi desdites données est effectué en utilisant des trames de management de la couche MAC. Ceci permet de réutiliser la structure et les fonctions des trames de management de la couche MAC pour réaliser l'invention.

Selon un premier mode de réalisation, une trame de management de la couche MAC d'un sous-type spécifique est utilisée pour véhiculer lesdites données depuis le terminal vers le point d'accès. Ceci permet une mise en oeuvre simple de l'invention.

Selon un second mode de réalisation, une trame de demande d'association de la couche MAC est utilisée pour véhiculer lesdites données depuis le terminal vers le point d'accès. La signalisation n'est ainsi que peu augmentée entre le terminal et le point d'accès.

Selon une caractéristique préférée du second mode de réalisation, lesdites données sont insérées dans des sous-champs ajoutés dans la trame de demande d'association.

Selon une caractéristique préférée, le point d'accès utilise lesdites données pour rejeter ou accepter une demande d'attachement du terminal.

Selon une autre caractéristique préférée, le point d'accès envoie au terminal une trame de réponse d'association contenant une cause d'erreur dépendante desdites données, dans le cas où la demande d'attachement est rejetée du fait des autres connexions du terminal. Ainsi le terminal peut utiliser ultérieurement cette information pour ses décisions de mobilité.

L'invention concerne un dispositif d'attachement qui comporte des moyens de mise en oeuvre des caractéristiques citées plus haut.

L'invention concerne aussi un programme d'ordinateur qui comporte des instructions de mise en oeuvre des caractéristiques citées plus haut.

Le dispositif et le programme d'ordinateur présentent des avantages analogues à ceux du procédé.

D'autres caractéristiques et avantages apparaîtront à la lecture des modes de réalisation préférés décrits en référence aux figures dans lesquelles :
- la figure 1 représente un terminal et un point d'accès, dans un premier mode de réalisation,
- la figure 2 représente des sous-types de trames de management,
- la figure 3 représente une trame de management selon le premier mode de réalisation de l'invention,
- la figure 4 représente des valeurs de sous-champs du champ "corps de trame" de la trame de management de la figure 3,
- la figure 5 représente des valeurs de sous-champs présents dans une trame de réponse, selon l'invention,
- la figure 6 représente un terminal et un point d'accès, dans un second mode de réalisation,
- la figure 7 représente des valeurs de sous-champs présents dans une trame de requête d'association, selon le second mode de réalisation de l'invention.

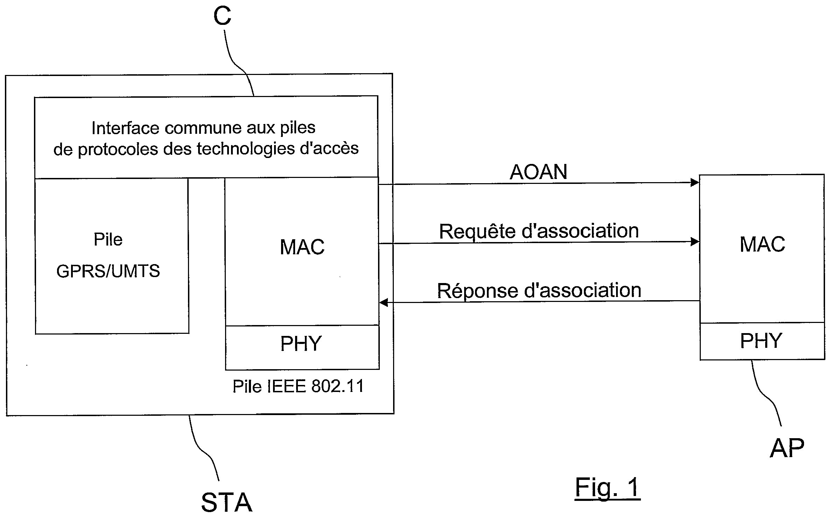

Selon un premier mode de réalisation de l'invention représenté à la **figure 1****,** un terminal multi accès **STA** est connecté à un réseau d'accès radio UMTS (selon l'anglais Universal Mobile Télécommunications System). Le terminal entre sous la couverture radio d'un réseau local sans fil obéissant à la norme IEEE 802.11. Ce réseau local sans fil comporte des points d'accès dont un, **AP**, est représenté à la **figure 1****.**

La technologie dite 802.11 permet à des terminaux de se connecter à des réseaux IP en utilisant une liaison sans fil. Des trames radio sont alors relayées du terminal (équipé d'une carte spécifique) au réseau IP par l'intermédiaire d'une station de base appelée point d'accès.

On suppose que le terminal multi accès STA dispose d'un mécanisme permettant aux implémentations de chaque technologie d'accès de reporter leurs paramètres, événements et états à une couche ou une interface **C** commune à toutes ces technologies d'accès. Cela permet que l'implémentation d'une procédure de demande de connexion à un réseau d'accès puisse utiliser des informations issues des piles de protocoles d'autres technologies d'accès présentes sur le terminal.

Le terminal STA détecte la couverture du réseau IEEE 802.11 par la réception de trames dites "Beacon" diffusées par le point d'accès AP. On suppose que le terminal engage un processus d'attachement avec le point d'accès AP. Pour s'attacher à un tel accès radio, les terminaux utilisent des trames spécifiques de niveau MAC (d'après l'anglais Médium Access Control). Ces trames de type "management" contiennent des informations comme l'adresse MAC du point d'accès AP, ses capacités et son SSID (d'après l'anglais Service Set IDentifier).

Selon l'invention, le terminal transmet au point d'accès des informations sur ses connexions à d'autres réseaux. Pour cela, dans le premier mode de réalisation, il utilise une trame de management MAC 802.11 d'un nouveau sous-type appelé AOAN (d'après l'anglais Availability of Other Access Networks).

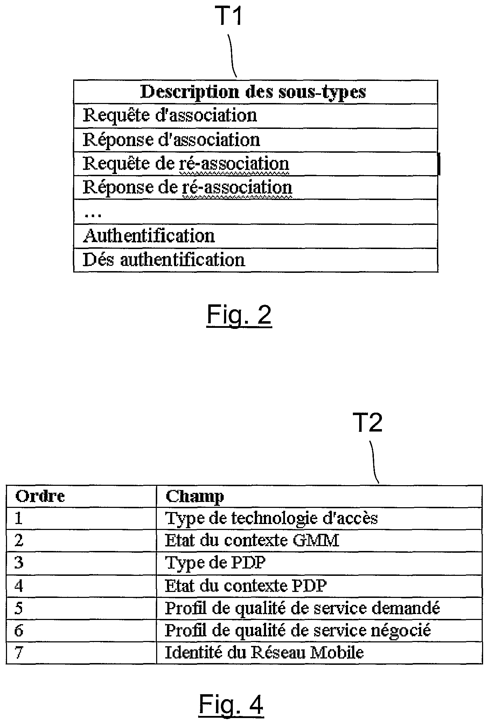

En référence au tableau **T1** de **figure 2**, la catégorie "management" des trames MAC 802.11 comporte plusieurs sous-types qui correspondent chacun à une fonction spécifique effectuée par une trame MAC. Ces sous-types définissent par exemple une requête d'association une réponse d'association, utilisées pour l'attachement du terminal.

Le nouveau sous-type AOAN peut être identifié au choix par l'une des quatre valeurs réservées de la permutation des 4 bits décrivant chaque sous-type. Sa fonction est d'informer le point d'accès AP auprès duquel le terminal STA fait une requête d'attachement, que ce terminal est par ailleurs connecté à d'autres réseaux d'accès (cellulaire par exemple). Le terminal envoie une trame MAC de management de sous-type AOAN avant d'initier la procédure d'association avec le point d'accès AP.

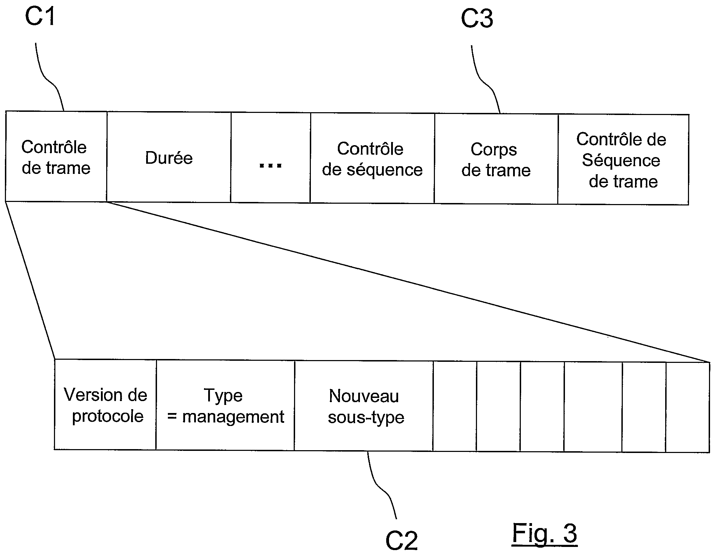

Selon la **figure 3**, le nouveau sous-type AOAN est indiqué par un identifiant de sous-type **C2**, présent dans le champ de contrôle de trame, **C1**, appelé "Frame Control" et situé dans l'entête de la trame de management MAC. Il est à noter que le format de la trame MAC de management n'est pas modifié par l'invention.

Lorsque le nouveau sous-type AOAN est utilisé, le champ **C3** du corps de la trame, appelé "Frame body", contient pour chaque technologie d'accès, un sous-champ appelé "type de technologie d'accès" suivi d'autres sous-champs caractéristiques de cette technologie d'accès.

Chaque sous-champ "type de technologie d'accès" renseigne sur la nature d'un des réseaux d'accès auxquels est déjà attaché le terminal STA.

Des exemples de types de technologie d'accès sont GPRS, UMTS, CDMA 1x-RTT, 802.16....

Les autres sous-champs, qui suivent un premier champ "type de technologie d'accès", dépendent de la technologie d'accès identifiée par ce premier sous-champ. Dans le cas GPRS (d'après l'anglais General Packet Radio Service) ou UMTS, et dans l'hypothèse où le terminal n'a ouvert qu'un contexte PDP (d'après l'anglais Packet Data Protocol) avec le réseau GPRS/UMTS, ces sous-champs comportent par exemple des paramètres du contexte GMM (d'après l'anglais GPRS Mobility Management) du terminal, comme représenté dans le tableau **T2** de **la** **figure 4****.**

Le point d'accès AP obtient ainsi l'information de connexion préalable du terminal STA à d'autres réseaux d'accès. Grâce au contenu des sous-champs qui caractérisent chaque technologie d'accès, le point d'accès AP connaît notamment l'état du trafic du terminal sur ces autres réseaux d'accès, la qualité de service obtenue sur ces réseaux, l'identité du fournisseur du réseau d'accès.

Après envoi de la trame MAC AOAN, le terminal STA envoie une requête d'association au point d'accès AP. Cette requête d'association est classique. En fonction des informations obtenues précédemment par le point d'accès, et d'autres critères d'admission internes, le point d'accès AP accepte ou non la requête d'association, par l'envoi au terminal STA d'une trame de réponse d'association, appelée "Association Response", qui fait état au terminal soit du succès de la demande, soit de son rejet.

Cette information est contenue dans le sous champ "status code" du champ "frame body" de la trame de réponse.

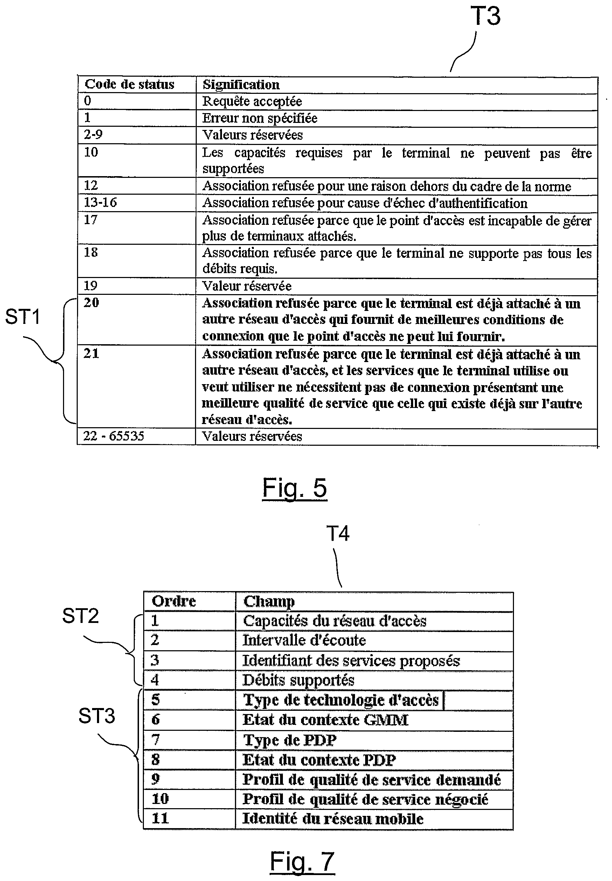

Lorsque la réponse est positive, le sous-champ "status code" a la valeur nulle. En cas de refus, le sous-champ "status code" contient l'une des causes d'erreur présentées dans le tableau **T3** de **la** **figure 5**. Selon l'invention, le point d'accès AP peut avoir des motifs de refus supplémentaires suite à la connaissance qu'il a de la connexion du terminal à d'autres réseaux d'accès, c'est pourquoi deux nouvelles causes d'erreur ayant les valeurs 20 et 21 sont introduites. Ces nouvelles causes d'erreur sont référencées **ST1** dans le tableau **T3** de la **figure 5****.**

La valeur 20 correspond au cas où la requête d'association est refusée parce que le terminal STA est déjà attaché à un autre réseau d'accès, qui fournit de meilleures conditions de connexion que le point d'accès AP ne peut lui fournir.

La valeur 21 correspond au cas où la requête d'association est refusée parce que le terminal STA est déjà attaché à un autre réseau d'accès, et les services que le terminal STA utilise ou veut utiliser ne nécessitent pas de connexion présentant une meilleure qualité de service que celle qui existe déjà sur l'autre réseau d'accès.

Ainsi, en cas de refus de l'attachement du terminal STA au réseau dont fait partie le point d'accès AP, et lorsque le refus est dû à l'information des autres connexions du terminal STA, la raison du refus est fournie au terminal STA.

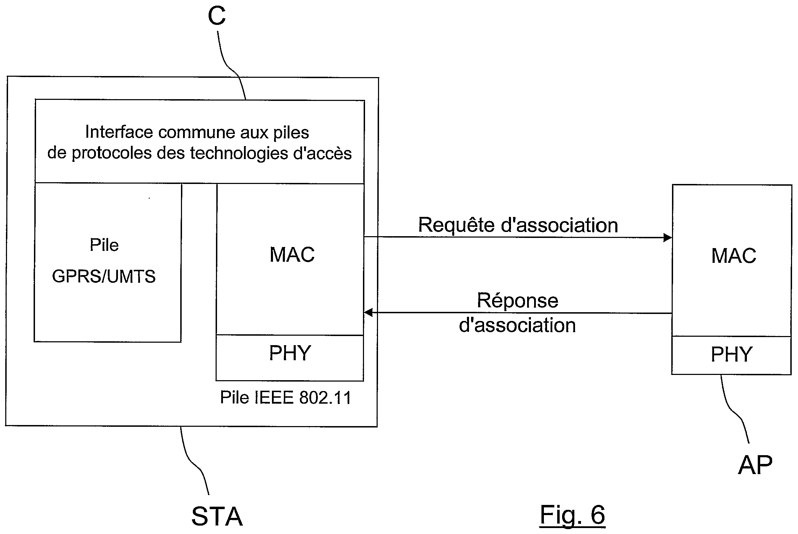

Un second mode de réalisation est représenté en référence à la **figure 6****.** Comme pour le premier mode de réalisation, un terminal multi-accès **STA** est connecté à un réseau d'accès radio UMTS. Le terminal rentre sous la couverture radio d'un réseau local sans fil obéissant à la norme IEEE 802.11. Ce réseau local sans fil comporte des points d'accès dont un, **AP**, est représenté à la **figure 6****.**

On suppose que le terminal multi accès STA dispose d'un mécanisme permettant aux implémentations de chaque technologie d'accès de reporter leurs paramètres, événements et états à une couche ou une interface commune à toutes ces technologies d'accès, référencée **C** dans la **figure 6**. Cela permet que l'implémentation d'une procédure de demande de connexion pour un réseau d'accès puisse utiliser des informations issues des piles de protocoles d'autres technologies d'accès présentes sur le terminal.

Le terminal STA détecte la couverture du réseau IEEE 802.11 par la réception de trames dites "Beacon" diffusées par le point d'accès AP. On suppose que le terminal engage un processus d'attachement avec le point d'accès AP. Selon l'invention, le terminal STA transmet au point d'accès AP des informations sur ses connexions à d'autres réseaux.

Pour cela, dans le second mode de réalisation, des sous-champs sont ajoutés au sous-champ "Frame body" de la trame de demande d'association, appelée "Association request", envoyée par le terminal au point d'accès.

Cette alternative a l'avantage de limiter l'augmentation du trafic de signalisation entre le terminal STA et le point d'accès AP.

Par exemple, dans le cas GPRS ou UMTS, et dans l'hypothèse où le terminal n'a ouvert qu'un contexte PDP avec le réseau GPRS/UMTS, le champ "frame body" de la trame "Association Request" ainsi modifiée est alors rempli comme indiqué dans le tableau **T4** la **figure 7**. Les quatre premiers champs, référencés **ST2**, sont connus, tandis que les sept suivants, référencés **ST3**, sont spécifiques à l'invention.

Le point d'accès AP obtient ainsi l'information de connexion préalable du terminal à d'autres réseaux d'accès. Grâce au contenu des sous-champs qui caractérisent chaque technologie d'accès, le point d'accès peut connaître notamment l'état du trafic du terminal sur ces autres réseaux d'accès, la qualité de service obtenue sur ces réseaux et l'identité du fournisseur du réseau d'accès.

Ensuite, comme dans le premier mode de réalisation, en fonction des informations obtenues précédemment par le point d'accès AP, et d'autres critères d'admission internes, le point d'accès AP accepte ou non la requête d'association, par l'envoi au terminal STA d'une trame de réponse d'association, appelée "Association Response", qui fait état au terminal STA soit du succès de la demande, soit de son rejet.

Cette information est contenue dans le sous champ "status code" du champ "frame body" de la trame de réponse.

Lorsque la réponse est positive, le sous-champ "status code" a la valeur nulle. En cas de refus, le sous-champ "status code" contient l'une des causes d'erreur indiquées dans le tableau **T3** de **la** **figure 5**. Selon l'invention, le point d'accès peut avoir des motifs de refus supplémentaires suite à la connaissance qu'il a de la connexion du terminal à d'autres réseaux d'accès, c'est pourquoi deux nouvelles causes d'erreur ayant les valeurs 20 et 21 sont introduites.

## Revendications

1. Procédé d'attachement d'un terminal multi accès (STA) à un réseau de communication, comportant la réception, à un point d'accès (AP) du réseau, de données en provenance du terminal concernant les connexions du terminal à d'autres réseaux, et **caractérisé en ce que** lesdites données sont utilisées par le point d'accès pour rejeter ou accepter une demande d'attachement du terminal.

2. Procédé d'attachement selon la revendication 1, **caractérisé en ce que** la réception desdites données est effectué au niveau de la couche MAC.

3. Procédé d'attachement selon la revendication 1 ou 2, **caractérisé en ce que** la réception desdites données est effectué en utilisant des trames de management de la couche MAC.

4. Procédé d'attachement selon l'une quelconque des revendications 2 à 3, **caractérisé en ce qu'**une trame de management de la couche MAC d'un sous-type spécifique (AOAN) est utilisée pour véhiculer lesdites données depuis le terminal vers le point d'accès.

5. Procédé d'attachement selon l'une quelconque des revendications 2 à 3, **caractérisé en ce qu'**une trame de demande d'association de la couche MAC est utilisée pour véhiculer lesdites données depuis le terminal vers le point d'accès.

6. Procédé d'attachement selon la revendication 5, **caractérisé en ce que** lesdites données sont insérées dans des sous-champs ajoutés dans la trame de demande d'association.

7. Procédé d'attachement selon l'une quelconque des revendications 1 à 6, **caractérisé en ce que** lesdites données comportent des informations sur la qualité de service obtenue par le terminal sur les dits autres réseaux.

8. Procédé d'attachement selon l'une quelconque des revendications 1 à 7, **caractérisé en ce que** le point d'accès envoie au terminal une trame de réponse d'association contenant une cause d'erreur dépendante desdites données, dans le cas où la demande d'attachement est rejetée du fait des autres connexions du terminal.

9. Procédé d'attachement selon l'une quelconque des revendications 1 à 8, **caractérisé en ce que** le réseau obéit à la norme IEEE 802.11.

10. Programme comportant des instructions pour mettre en oeuvre le procédé selon l'une quelconque des revendications 1 à 9.

11. Terminal multi accès contenant des moyens de mise en oeuvre du procédé selon l'une quelconque des revendications 1 à 9.

12. Point d'accès destiné à associer un terminal multi accès (STA) à un réseau de communication, contenant des moyens de mise en oeuvre adaptés à recevoir, en provenance du terminal, des données concernant les connexions du terminal à d'autres réseaux, et **caractérisé en ce que** le point d'accès est arrangé pour utiliser lesdites données pour rejeter ou accepter une demande d'attachement du terminal.

13. Point d'accès selon la revendication 12, arrangé en outre selon l'une quelconque des revendications 2 à 9.

## Patentansprüche

1. Verfahren zum Verbinden eines Endgeräts mit Mehrfachzugang (STA) mit einem Kommunikationsnetzwerk, das das Empfangen von Daten vom Endgerät bezüglich der Verbindungen des Endgeräts zu anderen Netzwerken an einem Zugangspunkt (AP) des Netzwerks umfasst, und **dadurch gekennzeichnet, dass** die Daten vom Zugangspunkt verwendet werden, um eine Anfrage zum Verbinden des Endgeräts abzulehnen oder anzunehmen.

2. Verfahren zum Verbinden nach Anspruch 1, **dadurch gekennzeichnet, dass** der Empfang dieser Daten auf der MAC-Schicht erfolgt.

3. Verfahren zum Verbinden nach Anspruch 1 oder 2, **dadurch gekennzeichnet, dass** der Empfang dieser Daten unter Verwendung von MAC-Schicht-Management-Frames erfolgt.

4. Verfahren zum Verbinden nach einem der Ansprüche 2 oder 3, **dadurch gekennzeichnet, dass** ein MAC-Schicht-Management-Frame eines bestimmten Subtyps (AOAN) verwendet wird, um diese Daten vom Endgerät zum Zugangspunkt zu übertragen.

5. Verfahren zum Verbinden nach einem der Ansprüche 2 oder 3, **dadurch gekennzeichnet, dass** ein Zuordnungsanfrage-Frame der MAC-Schicht verwendet wird, um diese Daten vom Endgerät zum Zugangspunkt zu übertragen.

6. Verfahren zum Verbinden nach Anspruch 5, **dadurch gekennzeichnet, dass** diese Daten in Unterfelder eingefügt werden, die dem Zuordnungsanfrage-Frame hinzugefügt werden.

7. Verfahren zum Verbinden nach einem der Ansprüche 1 bis 6, **dadurch gekennzeichnet, dass** diese Daten Informationen über die Dienstqualität beinhalten, die das Endgerät in den anderen Netzwerken erhält.

8. Verfahren zum Verbinden nach einem der Ansprüche 1 bis 7, **dadurch gekennzeichnet, dass** der Zugangspunkt an das Endgerät einen Zuordnungsantwortframe sendet, der eine von diesen Daten abhängige Fehlerursache enthält, falls die Anfrage zum Verbinden aufgrund anderer Verbindungen des Endgeräts abgelehnt wird.

9. Verfahren zum Verbinden nach einem der Ansprüche 1 bis 8, **dadurch gekennzeichnet, dass** das Netzwerk dem Standard IEEE 802.11 entspricht.

10. Programm mit Anweisungen zur Umsetzung des Verfahrens nach einem der Ansprüche 1 bis 9.

11. Endgerät mit Mehrfachzugang mit Mitteln zur Umsetzung des Verfahrens nach einem der Ansprüche 1 bis 9.

12. Zugangspunkt zum Zuordnen eines Endgeräts mit Mehrfachzugang (STA) zu einem Kommunikationsnetzwerk, das geeignete Umsetzungsmittel enthält, um vom Endgerät Daten über die Verbindungen des Endgeräts zu anderen Netzwerken zu empfangen, und **dadurch gekennzeichnet, dass** der Zugangspunkt angeordnet ist, um diese Daten zu verwenden, um eine Anfrage zum Verbinden des Endgeräts abzulehnen oder anzunehmen.

13. Zugangspunkt nach Anspruch 12, ferner angeordnet nach einem der Ansprüche 2 bis 9.

## Claims

1. An association method for associating a multi-access terminal (STA) with a communications network, the method including receiving data at an access point (AP) of the network, which data comes from the terminal and concerns the connections of the terminal to other networks, said method being **characterized in that** said data is used by the access point to reject or to accept a request for association of the terminal.

2. An association method according to claim 1, **characterized in that** said data is received at the Medium Access Control (MAC) layer.

3. An association method according to claim 1 or claim 2, **characterized in that** said data is received by using management frames of the MAC layer.

4. An association method according to claim 2 or claim 3, **characterized in that** a management frame of the MAC layer, which frame is of a specific sub-type, namely of the Availability of Other Access Networks (AOAN) sub-type, is used to convey said data from the terminal to the access point.

5. An association method according to claim 2 or claim 3, **characterized in that** an association request frame of the MAC layer is used to convey said data from the terminal to the access point.

6. An association method according to claim 5, **characterized in that** said data is inserted into sub-fields added to the association request frame.

7. An association method according to any one of claims 1 to 6, **characterized in that** said data contains information about the quality of service obtained by the terminal over said other networks.

8. An association method according to any one of claims 1 to 7, **characterized in that** the access point sends to the terminal an association response frame containing a cause of error dependent on said data, when the association request is rejected due to the other connections of the terminal.

9. An association method according to any one of claims 1 to 8, **characterized in that** the network conforms to the IEEE 802.11 Standard.

10. A program including instructions for implementing the method according to any one of claims 1 to 9.

11. A multi-access terminal containing means for implementing the method according to any one of claims 1 to 9.

12. An access point designed to associate a multi-access terminal (STA) with a communications network, and containing implementation means adapted to receive data coming from the terminal, which data concerns the connections of the terminal to other networks, said access point being **characterized in that** the access point is arranged to use said data for rejecting or accepting a request for association of the terminal.

13. An access point according to claim 12, further arranged according to any one of claims 2 to 9.
